(19) Europäisches Patentamt
European Patent Office
Office européen des brevets

(11) **EP 2 770 195 B1**

(12) **EUROPEAN PATENT SPECIFICATION**

(45) Date of publication and mention
of the grant of the patent:
**09.11.2016 Bulletin 2016/45**

(51) Int Cl.:
***F03D 7/02*** *(2006.01)*

(21) Application number: **13166543.2**

(22) Date of filing: **03.05.2013**

(54) **Wind turbine generator, and control unit and control method of the same**

Windturbinengenerator sowie Steuereinheit und Steuerverfahren dafür

Générateur de turbine éolienne et unité de commande et procédé de commande associé

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.02.2013 JP 2013035733**

(43) Date of publication of application:
**27.08.2014 Bulletin 2014/35**

(73) Proprietor: **MITSUBISHI HEAVY INDUSTRIES,
LTD.
Tokyo 108-8215 (JP)**

(72) Inventors:
• **Wakasa, Tsuyoshi
Tokyo, 108-8215 (JP)**
• **Iwasaki, Satoshi
Tokyo, 108-8215 (JP)**
• **Yamashita, Yukio
Tokyo, 108-8215 (JP)**
• **Hayashi, Yoshiyuki
Tokyo, 108-8215 (JP)**

(74) Representative: **Intès, Didier Gérard André et al
Cabinet Beau de Loménie
158 rue de l'Université
75340 Paris Cedex 07 (FR)**

(56) References cited:
**EP-A1- 2 154 363        WO-A2-2011/015180
US-A1- 2010 014 971**

**Description**

Technical Field

The present invention relates to a wind turbine generator, a control unit and a control method for the wind turbine generator. More specifically, the present invention relates to a wind turbine generator, a control unit and a control method for the wind turbine generator, which make it possible to adjust a pitch angle of a blade.

Background Art

In recent years, wind turbine generators for generating electric power using wind in a form of renewable energy have come into wide use from the perspective of preserving the environment. In a wind turbine generator, a force of wind impinging on the blade is converted to a rotational force of a rotation shaft, which is then converted to electrical power by a generator.

In a wind turbine generator, the wind impinging on the blade is uneven temporally and spatially, and thus the moment (a tilt moment) which impinges to tilt the rotation shaft impinges on the blade in some cases.

Patent Literature 1 describes a technique, in a wind turbine generator, for achieving extended operation time of a main bearing by reducing the mean bending moment on the bearing by means of a tilt moment on the rotor generated by means of aerodynamic forces on the blades.

More specifically, in the wind turbine generator of Patent Literature 1, data of the wind turbine generator are measured with pitch position sensors, blade load sensors and azimuth sensors. The measured sensor data are supplied to a computing unit where the data is converted to a feedback signal. The feedback signal is used in feedback control to control the pitch angle ([0055] of Patent Literature 1).

Citation List

Patent Literature

PTL 1
US 2010/0014971A

SUMMARY

Technical Problem

In a typical wind turbine generator, the rotation shaft is tilted approximately at 5 degrees with respect to a horizontal axis of the rotation shaft to avoid collision between the blade and the tower. As the rotation shaft is tilted, the rotation moment around the rotation shaft includes a vertical component. This vertical component of the moment around the rotation shaft affects the tilt moment impinging on the rotation shaft and also affects the variable load impinging on the blade root.

In Patent Literature 1, there is no mention of these effects or countermeasures against these effects.

It is an object of at least one embodiment of the present invention to provide a wind turbine generator, and a control unit and a control method for the wind turbine generator, which make it possible to suppress variable load impinging on the blade root and to improve durability of the wind turbine generator.

Solution to Problem

A wind turbine generator according to at least one embodiment of the present invention comprises:

a tower;
a nacelle supported by the tower;
a rotation shaft rotatably supported by the nacelle in such a state that the rotation shaft is tilted with respect to a horizontal axis;
at least two blades provided for the rotation shaft with a pitch angle of each of the blades around an axis along a radial direction of the rotation shaft being adjustable;
a pitch drive mechanism for adjusting the pitch angle of each of the blades; and
a control unit configured to determine an adjustment amount of the pitch angle by which the pitch drive mechanism is configured to adjust the pitch angle,

wherein the control unit including:

a Mzn moment calculation part for calculating a Mzn moment impinging on the rotation shaft around a vertical axis based on a load impinging on each of the plurality of blades;

a basic Mzn component calculation part for extracting a basic Mzn component from the Mzn moment, the basic Mzn component comprising at least a basic frequency component corresponding to a rotation speed of the rotation shaft and a stationary component;

a correction Mzn component calculation part for calculating a correction Mzn component which is a vertical component of the Mxn moment impinging on the rotation shaft around the rotation shaft; and

a pitch angle adjustment amount determination part for calculating a Mzn deviation which is a difference between the basic Mzn component and the correction Mzn component and determining the adjustment amount of the pitch angle of each of the blades based on the Mzn deviation.

In the above wind turbine generator, the Mzn deviation, which is the difference between the basic Mzn component and the correction Mzn component, is calculated and based on this Mzn deviation, the pitch angle adjustment amount is determined. The correction Mzn component is a vertical component of the Mxn moment around the rotation shaft impinging on the rotation shaft. According to this configuration, the pitch angle adjustment amount is determined with consideration of the effect of the vertical component of the Mxn moment caused because the rotation shaft is tilted with respect to the horizontal axis. By adjusting the pitch angle based on the pitch angle adjustment amount determined in this manner, the variable load impinging on the blade root of the blade is effectively suppressed and the durability of the wind turbine generator is improved.

In some embodiments, the pitch angle adjustment amount determination unit is configured to determine the adjustment amount of the pitch angle using the Mzn deviation and a periodic variation transfer function.

In the case of PI control, normally when the control amount varies periodically in a sinusoidal or cosinusoidal manner, the deviation can be reduced only to a certain extent. By increasing a gain, it is possible to make the deviation smaller. However, the larger gain may make the control unstable. The load impinging on the blade contains the component that periodically varies in a sinusoidal or cosinusoidal manner. Thus, solely by PI control, the variable component impinging on the blade can be reduced only to a certain extent.

In this structure, the pitch angle adjustment amount is determined using the periodic variation transfer function and thus, even if the load impinging on the blade contains the periodic variation component, it is possible to surely reduce the periodic variation component.

In some embodiments, the wind turbine generator further comprises:

at least one vibration meter for measuring vibration of the tower in at least two directions; and

a yaw drive mechanism for adjusting a yaw angle of the nacelle,

wherein the correction Mzn component calculation part is configured to calculate the correction Mzn component based on the vibration of the tower measured by the vibration meter and the yaw angle of the nacelle.

In some embodiments, the wind turbine generator further comprises:

at least one vibration meter for measuring vibration of the nacelle in at least two directions,

wherein the correction Mzn component calculation part is configured to calculate the correction Mzn component based on the vibration of the nacelle measured by the vibration meter.

In some embodiments, the blades comprise two blades.

Normally, a two-blade structure, compared to a three-blade structure, mechanically has poor balance and a large variable load resulting from the gyroscopic moment, etc. affects the rotation shaft and so on.

In this aspect, in the above structure where the pitch angle adjustment amount is determined based on the Mzn deviation which is the difference between the basic Mzn component and the correction Mzn component, the variable load can be effectively reduced even in the case where the blade is formed by two blades.

The above-described control unit further comprises:

a Myn moment calculation part for calculating a Myn moment impinging on the rotation shaft around a horizontal axis based on a load impinging on each of the blades;

a basic Myn component calculation part for extracting a basic Myn component from the Myn moment, the basic Myn component comprising at least a basic frequency component corresponding to the rotation speed of the rotation shaft and a stationary component; and

a correction Myn component calculation part for calculating a correction Myn component which is a horizontal component of a gyroscopic moment impinging on the rotation shaft,
wherein the pitch angle adjustment amount determination part is configured to calculate a Myn deviation which is a difference between the basic Myn component and the correction Myn component and determine the adjustment amount of the pitch angle of each of the blades based on the Mzn deviation and the Myn deviation.

In this structure, the pitch angle adjustment amount of the blade is determined based on the Mzn deviation and the Myn deviation. The Myn deviation is a difference between the basic Myn component and the correction Myn component and the correction Myn component is a horizontal component of a gyroscopic moment. According to this c, the pitch angle adjustment amount is determined with consideration of the effect of the horizontal component of the gyroscopic moment generated due to tilting of the rotation shaft. By adjusting the pitch angle based on the pitch angle adjustment amount determined in this manner, the variable load impinging on the rotation shaft, etc. can be suppressed effectively and the durability of the wind turbine generator is improved.

The pitch angle adjustment amount determination part is configured to determine the adjustment amount of the pitch angle of each of the blades using the Mzn deviation, the Myn deviation and a periodic variation transfer function.

In this structure, the pitch angle adjustment amount is determined using the periodic variation transfer function and thus, even if the load impinging on the blade contains the periodic variation component, it is possible to surely reduce the periodic variation component.

A control method, according to at least one embodiment of the present invention, is for a wind turbine generator which comprises: a tower; a nacelle supported by the tower; a rotation shaft rotatably supported by the nacelle in such a state that the rotation shaft is tilted with respect to a horizontal axis; at least two blades provided for the rotation shaft with a pitch angle of each of the blades around an axis along a radial direction of the rotation shaft being adjustable; and a pitch drive mechanism for adjusting the pitch angle of each of the blades. The control method comprises:

a Mzn moment calculation step of calculating a Mzn moment impinging on the rotation shaft around a vertical axis based on a load impinging on each of the blades;
a basic Mzn component calculation step of extracting a basic Mzn component from the Mzn moment, the basic Mzn component comprising a basic frequency component corresponding to a rotation speed of the rotation shaft and a stationary component;
a correction Mzn component calculation step of calculating a correction Mzn component which is a vertical component of the Mxn moment impinging on the rotation shaft around the rotation shaft; and
an adjustment amount determination step of calculating a Mzn deviation which is a difference between the basic Mzn component and the correction Mzn component and determining an adjustment amount of the pitch angle of each of the blades based on the Mzn deviation.

According to the above control method for the wind turbine generator, the Mzn deviation, which is the difference between the basic Mzn component and the correction Mzn component, is calculated and based on this Mzn deviation, the pitch angle adjustment amount is determined. The correction Mzn component is a vertical component of the Mxn moment around the rotation shaft impinging on the rotation shaft. According to this configuration, the pitch angle adjustment amount is determined with consideration of the effect of the vertical component of the Mxn moment caused because the rotation shaft is tilted with respect to the horizontal axis. By adjusting the pitch angle based on the pitch angle adjustment amount determined in this manner, the variable load impinging on the blade root of the blade is effectively suppressed and the durability of the wind turbine generator is improved.

In some embodiments, in the adjustment amount determination step, the adjustment amount of the pitch angle is determined using the Mzn deviation and a periodic variation transfer function.

In this structure, the pitch angle adjustment amount is determined using the periodic variation transfer function and thus, even if the load impinging on the blade contains the periodic variation component, it is possible to surely reduce the periodic variation component.

In some embodiments, the wind turbine generator further comprises a yaw drive mechanism for adjusting a yaw angle of the nacelle, and
in the correction Mzn component calculation step, the correction Mzn component is calculated based on vibration of the tower in at least two directions and the yaw angle of the nacelle.

In some embodiments, in the correction Mzn component calculation step, the correction Mzn component is calculated based on vibration of the nacelle in at least two directions.

In some embodiments, the control method for the wind turbine generator further comprises:

a Myn moment calculation step of calculating a Myn moment impinging on the rotation shaft around a horizontal axis based on a load impinging on each of the blades;
a basic Myn component calculation part for extracting a basic Myn component from the Myn moment by removing a high-frequency component having frequency higher than a basic frequency component corresponding to the rotation speed of the rotation shaft, the basic Myn component comprising the basic frequency component and a stationary component; and

a correction Myn component calculation step of calculating a correction Myn component which is a horizontal component impinging on the rotation shaft around a horizontal axis due to a gyroscopic moment impinging on the rotation shaft,

wherein, in the adjustment amount determination step, a Myn deviation which is a difference between the basic Myn component and the correction Myn component is calculated and the adjustment amount of the pitch angle of each of the blades is determined based on the Mzn deviation and the Myn deviation.

In this structure, the pitch angle adjustment amount of the blade is determined based on the Mzn deviation and the Myn deviation. The Myn deviation is a difference between the basic Myn component and the correction Myn component and the correction Myn component is a horizontal component of a gyroscopic moment. According to this c, the pitch angle adjustment amount is determined with consideration of the effect of the horizontal component of the gyroscopic moment generated due to tilting of the rotation shaft. By adjusting the pitch angle based on the pitch angle adjustment amount determined in this manner, the variable load impinging on the rotation shaft, etc. can be suppressed effectively and the durability of the wind turbine generator is improved.

In some embodiments, in the adjustment amount determination step, the adjustment amount of the pitch angle of each of the blades is determined using the Mzn deviation, the Myn deviation and a periodic variation transfer function.

In this structure, the pitch angle adjustment amount is determined using the periodic variation transfer function and thus, even if the load impinging on the blade contains the periodic variation component, it is possible to surely reduce the periodic variation component.

A control unit, according to the present invention, for a wind turbine generator which comprises: a tower; a nacelle supported by the tower; a rotation shaft rotatably supported by the nacelle in such a state that the rotation shaft is tilted with respect to a horizontal axis; at least two blades provided for the rotation shaft with a pitch angle of each of the blades around an axis along a radial direction of the rotation shaft being adjustable ; and a pitch drive mechanism for adjusting the pitch angle of each of the blades, comprises:

a Mzn moment calculation part for calculating a Mzn moment impinging on the rotation shaft around a vertical axis based on a load impinging on each of the blades;

a basic Mzn component calculation part for extracting a basic Mzn component from the Mzn moment, the basic Mzn component comprising a basic frequency component corresponding to a rotation speed of the rotation shaft and a stationary component;

a correction Mzn component calculation part for calculating a correction Mzn component which is a vertical component of the Mxn moment impinging on the rotation shaft around the rotation shaft; and

a pitch angle adjustment amount determination part for calculating a Mzn deviation which is a difference between the basic Mzn component and the correction Mzn component and determining an adjustment amount of the pitch angle of each of the blades based on the Mzn deviation.

In the above control unit for the wind turbine generator, the Mzn deviation, which is the difference between the basic Mzn component and the correction Mzn component, is calculated and based on this Mzn deviation, the pitch angle adjustment amount is determined. The correction Mzn component is a vertical component of the Mxn moment around the rotation shaft impinging on the rotation shaft. According to this configuration, the pitch angle adjustment amount is determined with consideration of the effect of the vertical component of the Mxn moment caused because the rotation shaft is tilted with respect to the horizontal axis. By adjusting the pitch angle based on the pitch angle adjustment amount determined in this manner, the variable load impinging on the blade root of the blade is effectively suppressed and the durability of the wind turbine generator is improved.

[Advantageous Effects]

According to at least one embodiment of the present invention, provided is a wind turbine generator, a control unit for the wind turbine generator and a control method for the wind turbine generator which make it possible to suppress the variable load impinging on the blade root of the blade and also to improve durability of the wind turbine generator.

BRIEF DESCRIPTION OF DRAWINGS

[FIG.1] FIG.1 is a schematic view of a structure of a wind turbine generator according to some embodiments of the present invention.

[FIG.2] FIG.2 is a schematic oblique view of blades of the wind turbine generator 1, illustrating how to set coordinates around the blades.

[FIG.3] FIG.3 is a schematic side view of blades of the wind turbine generator 1, illustrating how to set coordinates around the blades.

[FIG.4] FIG.4 is a schematic side view of blades of the wind turbine generator 1, illustrating how to set coordinates around the blades.

[FIG.5] FIG.5 is a block diagram schematically illustrating a control system used in the wind turbine generator of FIG.1.

[FIG.6] FIG.6 is a block diagram schematically illustrating a structure of a control unit of FIG.5.

[FIG.7] FIG.7 is a block diagram schematically illustrating a structure of a control unit according to another embodiment.

DETAILED DESCRIPTION

Embodiments of the present invention will now be described in detail with reference to the accompanying drawings. It is intended, however, that unless particularly specified in these embodiments, dimensions, materials, shape, its relative positions and the like shall be interpreted as illustrative only and not limitative of the scope of the present invention.

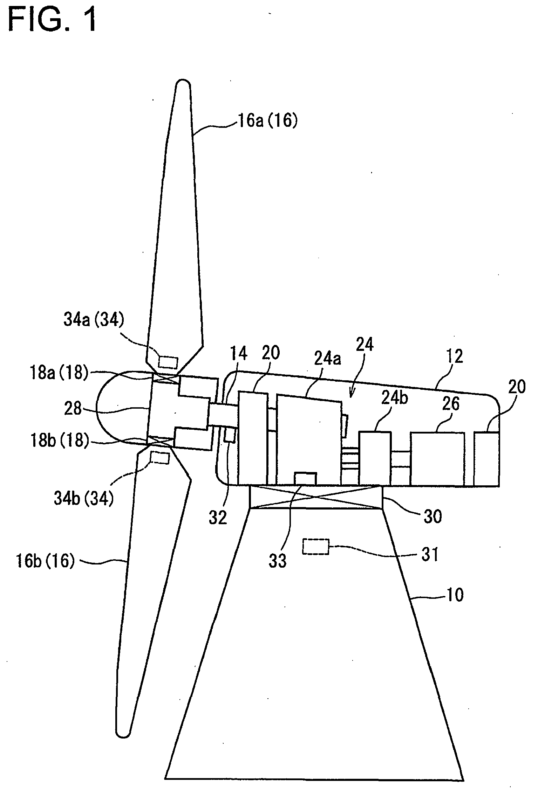

FIG.1 is a schematic view of a structure of a wind turbine generator according to some embodiments of the present invention. As illustrated in FIG.1, the wind turbine generator 1 is provided with a tower 10, a nacelle 12 supported by the tower 10, a rotation shaft 14 rotatably supported by the nacelle 12 in such a state that the rotation shaft 14 is tilted relative to the horizontal axis, at least two blades 16 provided for the rotation shaft 14 so that its pitch angle around an axis along the radial direction of the rotation shaft 14 is adjustable, a pitch drive mechanism 18 for adjusting the pitch angle of each of the blades 16, and a control unit 20 configured to determine a pitch angle adjustment amount to be adjusted by the pitch drive mechanism 18.

In some embodiments, the wind turbine generator is provided with a bearing 22 installed in the nacelle 12, a speed increasing mechanism 24, and a generator 26. The rotation shaft 14 is rotatably supported by the bearing 22. The rotation shaft 14 is rotated when the wind hits the blade. The rotation shaft 14 is connected to the speed-increasing mechanism 24 and the speed-increasing mechanism 24 is connected to the generator 26. The speed increasing mechanism 24 is configured to increase the rotation speed of the rotation shaft 24 and then transfer it to the generator 26.

In some embodiments, the speed increasing mechanism 24 is formed by a hydraulic pump 24a and a hydraulic motor 24b and the rotation shaft 14 is connected to the hydraulic pump 24a. The hydraulic pump 24a compresses operating oil using the rotation of the rotation shaft 14 resulting from the wind energy, and then supplies the high pressure operating oil to the hydraulic motor 24b. The hydraulic motor 24b includes an output shaft connected to the generator 26. The hydraulic motor 24b rotates the output shaft using the high pressure operating oil supplied from the hydraulic pump 24a so as to cause the generator 26 to generate electric power. The operating oil having performed work in the hydraulic motor 24b undergoes pressure decrease and the operating oil returns to the hydraulic pump 24a.

In some embodiments, the speed increasing mechanism 24 is formed of a planetary gear mechanism.

In some embodiments, the rotation shaft 14 is directly connected to the generator 26 without the speed increasing mechanism 24.

The tower 10 is, for instance, installed on the ground or offshore. In some embodiments, the wind turbine generator is provided with a yaw drive mechanism 30 being capable of adjusting the yaw angle of the nacelle 12 around the vertical axis and the control unit 20 is configured to determine the adjustment amount of the yaw angle according to the wind direction.

In some embodiments, the two or more blades 16 is constituted of a first blade 16a and a second blade 16b and the first blade 16a and the second blade 16b are connected to the rotation shaft 14 via a T-shaped hub 28. The pitch drive mechanism 18 is formed by a first pitch drive mechanism 18a for the first blade 16a and a second pitch drive mechanism 18b for the second blade 16b. The first pitch drive mechanism 18a is provided in a connection part between the first blade 16a and the hub 28. The second pitch drive mechanism 18b is provided in a connection part between the second blade 16b and the hub 28.

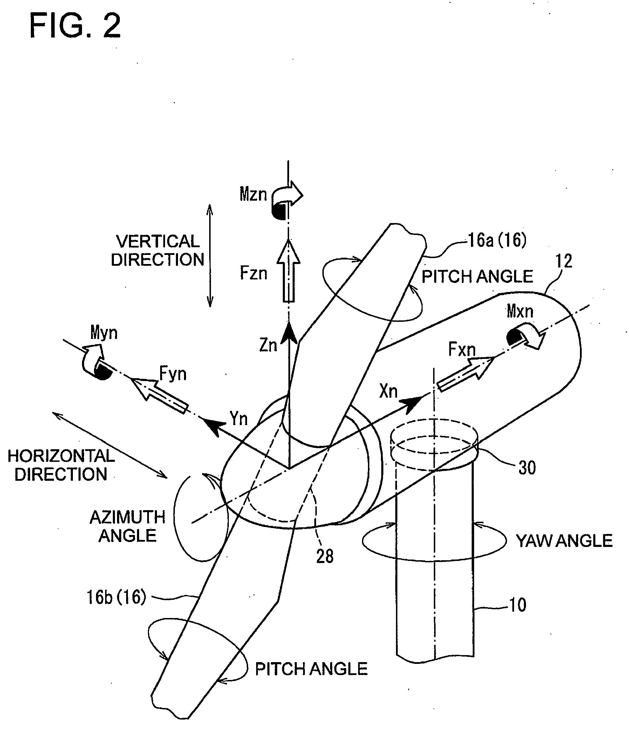

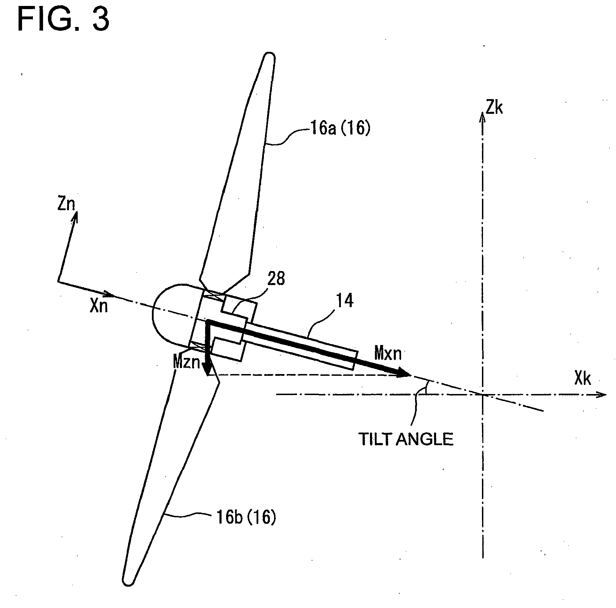

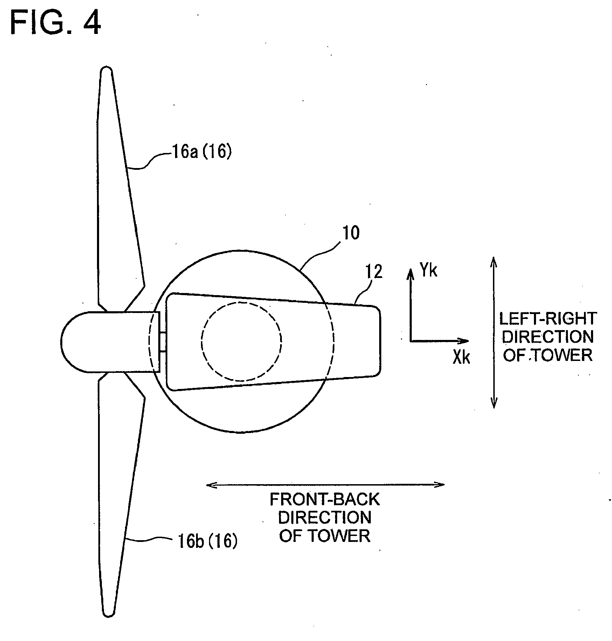

FIG.2, FIG.3 and FIG.4 each illustrate how to set coordinates in the wind turbine generator in the present specification. FIG.2 is a schematic perspective view of the blades 16 (16a, 16b) and a peripheral area of the blades 16. FIG.3 is a schematic side view of the blades 16 (16a, 16b) and the peripheral area of the blades 16. FIG.4 is a schematic top view of the blades 16 (16a, 16b) and the peripheral area of the blades 16.

As illustrated in FIG.2 to FIG.4, Xk axis, Yk axis and Zk axis are perpendicular to one another. Xk axis extends in the horizontal direction along a front-back direction of the tower 10. Yk axis extends in the horizontal direction along the width direction of the tower 10. Zk axis extends vertically.

Xn axis, Yn axis and Zn axis extend perpendicular to one another. Xn axis extends along the rotation axis 14 and is oblique to the horizontal axis corresponding to the tilt angle. Yn axis extends horizontally along the width direction of the tower 10. Zn axis is oblique to the vertical direction corresponding to the tilt angle.

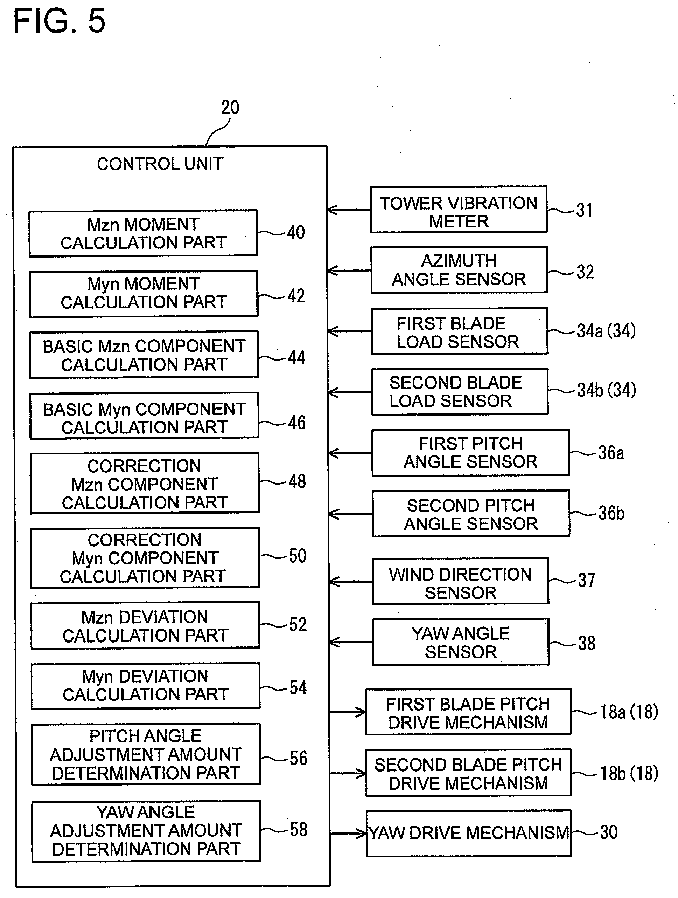

FIG.5 illustrates a schematic structure of the control system of the wind turbine generator.

As illustrated in FIG.5, in some embodiments, the control system includes the control unit 20 and a sensor group. The control unit 20 controls the pitch drive mechanism 18 based on data measured by the sensor group.

In some embodiments, the sensor group includes a tower vibration meter 31, an azimuth angle sensor 32, and a blade load sensor 34.

The tower vibration meter 31 is provided to detect the load impinging on the tower 10 in at least two directions. In some embodiments, the tower vibration meter 31 is formed by a vibration meter installed in the tower 10 and is capable of measuring vibration in a front-back direction and in a left-right direction of the tower 10.

In some embodiments, the sensor group includes a nacelle vibration meter 33 (see FIG.1) for measuring the load impinging on the nacelle 12 in at least two directions, instead of the tower vibration meter 31. The nacelle vibration meter 33 is formed by a vibration meter installed in the nacelle 12 and is capable of measuring vibration in the front-back direction and the left-right direction of the nacelle 12.

The azimuth angle sensor 32 is a sensor for measuring a rotation angle (the azimuth angle) of the rotation shaft 14. The azimuth angle sensor 32 is, for instance, formed by a rotary encoder and is installed adjacent to a part of the rotation shaft 14 that extends inside the nacelle 12. The azimuth angle is a rotation angle of the rotation shaft 14 in Yn-Zn plane.

The blade load sensor 34 is a sensor for measuring the load impinging on the blade root of each blade 16. In some embodiments, the blade load sensor 34 is formed by a first blade load sensor 34a for measuring the load impinging on the blade root of the first blade 16a, and a second blade load sensor 34b for measuring the load impinging on the blade root of the second blade 16b. The first blade load sensor 34a and the second blade load sensor 34b are attached to the blade roots of the first blade 16a and the second blade 16b, respectively.

In some embodiments, the first blade load sensor 16a and the second blade load sensor 16b are attached to the hub 28.

In some embodiments, the sensor group includes a pitch angle sensor 36 housed in the pitch drive mechanism 18. The pitch angle sensor 36 is formed by a first pitch angle sensor 36a for measuring the pitch angle of the first blade 16a and a second pitch angle sensor 36b for measuring the pitch angle of the second blade 16b.

In some embodiments, the sensor group includes a wind direction sensor 37 for measuring a wind direction in the periphery of the wind turbine generator, and a yaw angle sensor 38 housed in the yaw drive mechanism 30. The yaw angle sensor 38 is provided to measure the yaw angle of the nacelle 12.

In some embodiments, the control unit 20 includes a Mzn moment calculation part 40, a Myn moment calculation part 42, a basic Mzn component calculation part 44, a basic Myn component calculation part 46, a correction Mzn component calculation part 48, a correction Myn component calculation part 50, a Mzn deviation calculation part 52, a Myn deviation calculation part 54, and a pitch angle adjustment amount determination part 56.

The Mzn moment calculation part 40 calculates a Mzn moment impinging on the rotation shaft 14 around a vertical axis based on a load impinging on each of the blades 16 (16a, 16b) (Mzn moment calculation step). The Myn moment calculation part 42 calculates a Myn moment around the horizontal axis (Yn axis) impinging on the rotation shaft 14 based on the load impinging on each of the blades 16 (16a, 16b) (Myn moment calculation step). The load impinging on each of the blades 16 (16a, 16b) is measured by the blade load sensor 34 (34a, 34b) and then inputted to the control unit 20.

The basic Mzn component calculation part 44 extracts a basic Mzn component from the Mzn moment calculated by the Mzn moment calculation part 40 (a basic Mzn component calculation step). The basic Mzn component includes at least a basic frequency component corresponding to the rotation speed of the rotation shaft 14 and a stationary component. The basic Mzn component is generated by the wind and is illustrated as the Mzn component in FIG.2.

The basic Myn component calculation part 46 extracts a basic Myn component from the Myn moment calculated by the Myn moment calculation part 42 (a basic Myn component calculation step). The basic Myn component includes at least the basic frequency component corresponding to the rotation speed of the rotation shaft 14 and a stationary component.

The correction Mzn component calculation part 48 calculates a correction Mzn component which is a vertical component of the Mxn moment impinging on the rotation shaft 14 around the rotation shaft 14 (a correction Mzn calculation step). The correction Mzn component is illustrated as Mzn in FIG.3.

The correction Myn component calculation part 50 calculates a correction Myn component which is a horizontal component of a gyroscopic moment impinging on the rotation shaft 14 (a correction Myn calculation step).

The Mzn deviation calculation part 52 calculates a Mzn deviation which is a difference between the basic Mzn component and the correction Mzn component (a Mzn deviation calculation step).

The Myn deviation calculation part 54 calculates a Myn deviation which is a difference between the basic Myn component and the correction Myn component (a Myn deviation calculation step).

The pitch angle adjustment amount determination part 56 determines the pitch angle adjustment amount of each of the blades 16 (16a, 16b) based on the Mzn deviation and the Myn deviation (a pitch angle adjustment amount determination step).

The control unit 20 may be constituted of, for instance, a computer formed by a APU, a memory unit, an external storage, and an input-output unit. In this case, by running the program stored in the external storage, it is possible to achieve functions of the Mzn moment calculation part 40, the Myn moment calculation part 42, the basic Mzn component calculation part 44, the basic Myn component calculation part 46, the correction Mzn component calculation part 48, the correction Myn component calculation part 50, the Mzn deviation calculation part 52, the Myn deviation calculation part 54, and the pitch angle adjustment amount determination part 56.

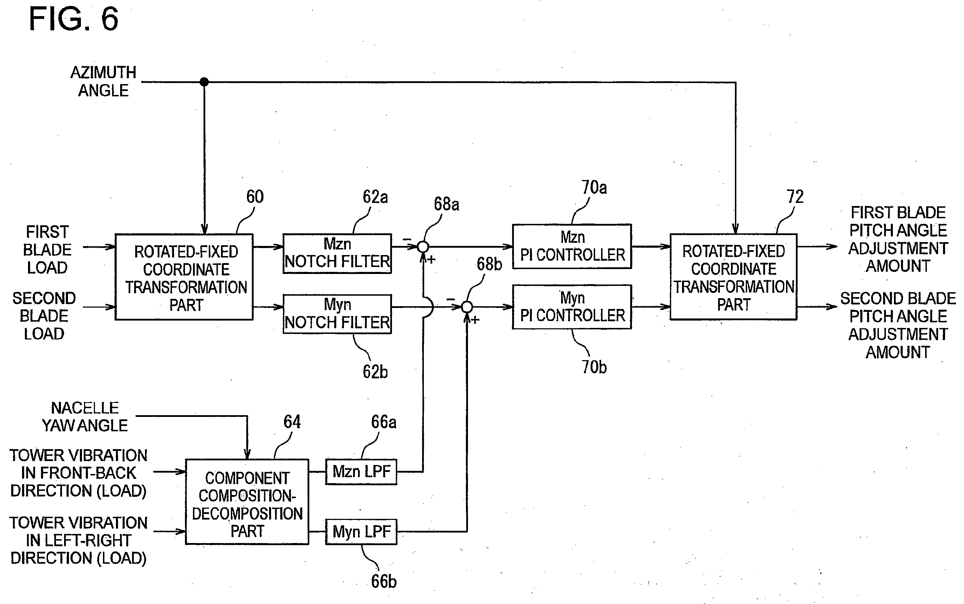

The method for controlling the pitch angle of the blade 16 (16a, 16b), which is performed by the control unit 20, is explained below. In some embodiments, the control unit 20 determines the pitch angle adjustment amount of the first blade 16a and the second blade 16b based on the data measured by the sensor group as illustrated in FIG.6. Then, the pitch drive mechanism 18 adjusts the pitch angles of the first blade 16a and the second blade 16b based on the determined pitch angle adjustment amount.

More specifically, as illustrated in FIG.6, the azimuth angle, the load impinging on the blade root of the first blade 16a (the first blade load), the load impinging on the blade root of the second blade 16b (the second blade load), the yaw angle of the nacelle 12, the vibration of the tower 10 in the front-back direction and the vibration of the tower 10 in the left-right direction are inputted to the control unit 20,

The control unit 20 includes a rotated-fixed coordinate transformation part 60 which forms the Mzn moment calculation part 40 and the Myn moment calculation part 42. The rotated-fixed coordinate transformation part 60 transforms the first blade load and the second blade load from rotated system coordinates to fixed system coordinates. Equation (1) described below represents the first blade load and the second blade load before the coordinate transformation. Equation (2) described below represents the first blade load and the second blade load after the coordinate transformation.

In equation (1) and equation (2), F is an azimuth angle, Mm is an amplitude of a variable component of the load on the blade root of the blade 16, M01 is a stationary component of the load on the blade root of the first blade 16a, M02 is a stationary component of the load of the blade root of the second blade 16b, P is a circular constant, D is a constant. M01 and M02 each indicate the load impinging on the blade root of each blade 16 (16a, 16b) resulting from imbalance in weight or location of center of gravity of the blade 16 (16a, 16b) or the hub 28.

$$\begin{bmatrix} M_{yb1} \\ M_{yb2} \end{bmatrix} = \begin{bmatrix} M_m \cos(F+D) + M_{01} \\ M_m \cos(F+P+D) + M_{02} \end{bmatrix} \quad \cdots \quad (1)$$

$$\begin{bmatrix} M_{yn} \\ M_{zn} \end{bmatrix} = \begin{bmatrix} M_m \cos(2F+D) + (M_{01} - M_{02})\cos F + M_m \cos D \\ M_m \cos(2F+D) + (M_{01} - M_{02})\sin F + M_m \sin D \end{bmatrix} \quad \cdots \quad (2)$$

The control unit 20 further includes a Mzn notch filter 62a which forms the basic Mzn component calculation part 44. The Mzn notch filter 62a passes the basic frequency component corresponding to the second member $((M_{01}-M_{02})\sin F)$ and the stationary component corresponding to the third member $(M_m \sin D)$ of the Mzn moment which are on the right side of equation(2). In other words, the Mzn notch filter 62a is a band-stop filter that blocks a second harmonic component corresponding to the first member $(M_m \cos(2F+D))$ of the Mzn moment which is on the right side of equation (2).

The control unit 20 includes a Myn notch filter 62b forming the basic Myn component calculation part 46. The Myn notch filter 62b passes the basic frequency component corresponding to the second member $((M_{01}-M_{02})\sin F)$ and the stationary component corresponding to the third member $(M_m \sin D)$ of the Myn moment which is on the right side of equation (2). In other words, the Myn notch filter 62b is a band-stop filter that blocks a second harmonic component corresponding to the first member $(M_m \cos(2F+D))$ of the Myn moment which is on the right side of equation (2).

The control unit 20 includes a component composition-decomposition part 64 which forms the correction Mzn component calculation part 48 and the correction Myn component calculation part 50. The component composition-decomposition part 64 composes the vibration component in the front-back direction of the tower 10 and the vibration component in the left-right direction of the tower that have been inputted thereto, and then decomposes the components into the correction Mzn component and the correction Myn component.

In some embodiments, the nacelle 12 is rotatable and thus, the yaw angle of the nacelle 12 is also inputted to the component composition-decomposition part 64 and the component composition-decomposition part 64 performs composition and decomposition with consideration of the yaw angle as well.

In some embodiments, the control unit 20 includes a Mzn LPF (Mzn Low Pass Filter) 66a which forms the correction Mzn component calculation part 48. The Mzn LPF 66a removes a high-frequency noise component from the correction Mzn component calculated by the component composition-decomposition part 64.

In some embodiments, the control unit 20 includes a Myn LPF (Myn Low Pass Filter) 66b which forms the correction Myn component calculation part 50. The Myn LPF 66b removes a high-frequency noise component from the correction Myn component calculated by the component composition-decomposition part 64.

The control unit 20 includes a Mzn subtractor 68a which forms the Mzn deviation calculation part 52. The Mzn subtractor 68a calculates the Mzn deviation which is a difference between the basic Mzn component and the correction Mzn component.

The control unit 20 further includes a Myn subtractor 68b which forms the Myn deviation calculation part 54. The Myn subtractor 68b calculates the Myn deviation which is a difference between the basic Myn component and the correction Myn component.

Further, the control unit 20 includes a Mzn PI controller 70a, a Myn PI controller 70b and a rotated-fixed coordinate transformation part 72 which form the pitch angle adjustment amount determination part 56.

The Mzn PI controller 70a is a proportional-integral controller for calculating a pitch angle operation amount in the fixed system coordinates so as to reduce the Mzn deviation, i.e. to bring the Mzn deviation close to zero.

Further, the Myn PI controller 70b is a proportional-integral controller for calculating a pitch angle operation amount in the fixed system coordinates so as to reduce the Myn deviation, i.e. to bring the Myn deviation close to zero.

The rotated-fixed coordinate transformation part 72 transforms the pitch angle operation amounts calculated by the Mzn PI controller 70a and the Myn PI controller 70b into rotated system coordinates and based on this, determines the pitch angle adjustment amount of the first blade 16a and the pitch angle adjustment amount of the second blade 16b.

Based on the pitch angle adjustment amount of the first blade 16a and the pitch angle adjustment amount of the second blade 16b determined in this manner, the first pitch drive mechanism 18a and the second pitch drive mechanism 18b adjust the pitch angle of the first blade 16a and the pitch angle of the second blade 16b, respectively.

In the wind turbine generator in relation to the above-described embodiments, the Mzn deviation, which is the difference between the basic Mzn component and the correction Mzn component, is calculated and based on this Mzn deviation, the pitch angle adjustment amount is determined. The correction Mzn component is a vertical component of the Mxn moment around the rotation shaft 14 impinging on the rotation shaft 14. According to this configuration, the pitch angle adjustment amount is determined with consideration of the effect of the vertical component of the Mxn moment caused because the rotation shaft 14 is tilted with respect to the horizontal axis. By adjusting the pitch angle based on the pitch angle adjustment amount determined in this manner, the variable load impinging on the blade root of the blade 16 (16a, 16b) is effectively suppressed and the durability of the wind turbine generator is improved.

In other words, by adjusting the tilt angle based on the load impinging on the blade root of the blade 16 (16a, 16b) and the load impinging on other part of the blade 16 (16a, 16b), it is possible to reduce the basic frequency component (1P component) corresponding to the rotation speed of the blade 16 (16a, 16b) together with a double frequency component (2P component) of the variable load impinging on the nacelle 12 and the tower 10. The double frequency component (2P component) has frequency twice as high as the basic frequency component. By reducing both the 2P component and the 1P component in this manner, it is possible to reduce the fatigue load impinging on the tower 10 and on the nacelle 12 and the durability of the wind turbine generator is improved.

The 1P component is expressed by the second member which is on the right side of equation (2), $((M_{01}-M_{02})\cos F, (M_{01}-M_{02})\sin F)$. The 1P component includes the difference between the load M01 and the load M02 and is the variable load component that causes imbalance resulting from the weight and location of center of gravity of the blade 16 (16a, 16b) or the hub 28.

Further, the third member on the right side of equation (2), $(M_m\cos D, M_m\sin D)$ indicates a component that is considered almost stationary, i.e. the stationary component. This stationary component includes information regarding Mm, i.e. information regarding variable amplitude of the load impinging on the blade root of the blade 16 (16a, 16b). The stationary component is compensated so that the variable load component of the 2P component impinging on the nacelle 12 and the tower 10 can be reduced.

In the wind turbine generator according to some embodiments, the control unit 20 includes a yaw angle adjustment amount determination part 58. By adjusting the yaw angle of the nacelle 12 corresponding to the wind direction by means of the yaw angle adjustment amount determination part 58, it is possible to produce electric power effectively. The correction Mzn component calculation part 48 of the control unit 20 is capable of calculating the correction Mzn component based on the vibration of the tower 10 measured by the tower vibration meter 31 and the yaw angle of the nacelle 12.

In the wind turbine generator according to some embodiments, the correction Mzn component 48 of the control unit 20 is capable of calculating the correction Mzn component based on the vibration of the nacelle 12 measured by the nacelle vibration meter 33.

In the wind turbine generator according to some embodiments, the blade 16 is formed by two blades 16 (16a, 16b). Normally, a two-blade structure, compared to a three-blade structure, mechanically has poor balance and a large variable load resulting from the gyroscopic moment, etc. affects the rotation shaft 14 and so on.

In this aspect, in the above structure where the pitch angle adjustment amount is determined based on the Mzn deviation which is the difference between the basic Mzn component and the correction Mzn component, the variable load can be effectively reduced even in the case where the blade 16 is formed by two blades.

In the wind turbine generator according to some embodiments, the pitch angle adjustment amount of the blade 16 (16a, 16b) is determined based on the Mzn deviation and the Myn deviation. The Myn deviation is the difference between the basic Myn component and the correction Myn component and the correction Myn component is a horizontal component of the gyroscopic moment.

The gyroscopic moment is generated when the rotating rotation shaft 14 is tilted. For instance, when the nacelle 12 rotates around the vertical axis for the yaw angle adjustment, the gyroscopic moment impinges on the rotation shaft 14 to tilt the rotation shaft 14 around the vertical axis and the axis perpendicular to the rotation shaft 14. When the gyroscopic moment occurs, large variable load is loaded on the connection part etc. which connects the blade 16 (16a, 16b) to the rotation shaft 14. It is desirable to reduce this variable load for the purpose of maintaining the operation life of the connection part, etc.

In this aspect, in the wind turbine generator according to some embodiments, by determining the pitch angle adjustment amount of the blade 16 (16a, 16b) based on the Mzn deviation and the Myn deviation, the pitch angle adjustment amount is determined with consideration of the effect of the horizontal component of the gyroscopic moment generated due to tilting of the rotation shaft 14. By adjusting the pitch angle based on the pitch angle adjustment amount determined in this manner, the variable load impinging on the rotation shaft 14, etc. can be suppressed effectively and the durability of the wind turbine generator is improved.

Therefore, according to this structure, even if the gyroscopic moment is generated due to adjustment of the yaw angle, the variable load resulting from the gyroscopic moment can be suppressed by adjusting the pitch angle.

More specifically, according to this structure, it is possible to suppress the basic frequency component (1P component) and the component not greater than the basic frequency (stationary component) that result from the title angle of the rotation shaft 14, the gyroscopic moment and uneven balance. Further, the basic frequency component has frequency corresponding to the rotation speed of the rotation shaft 14.

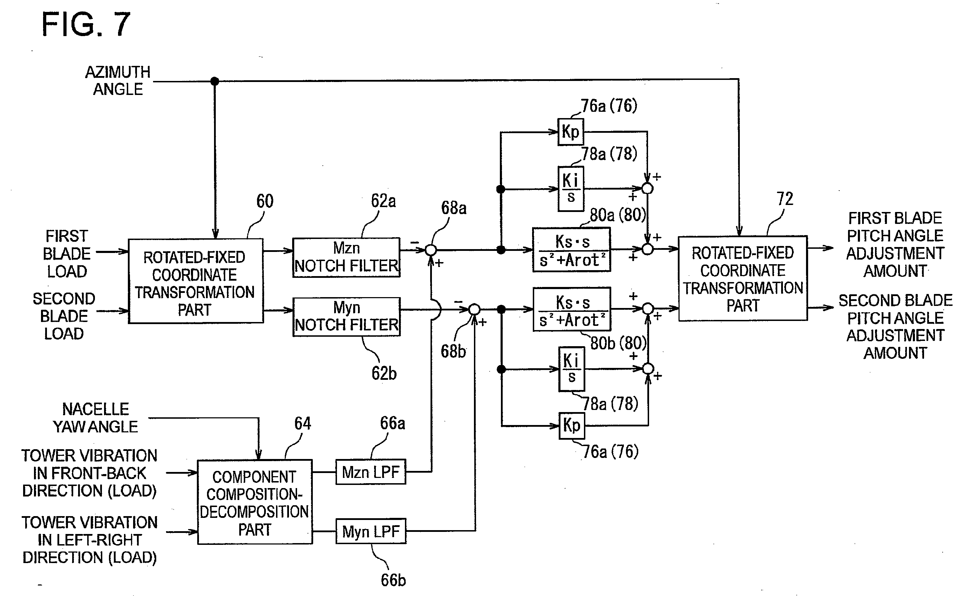

In some embodiments, as illustrated in FIG.7, the pitch angle adjustment amount determination part 56 of the control unit 20 includes a proportioning controller 76, an integrating controller 78, and a periodic variation controller 80. The proportioning controller 76 outputs response to the input using a transfer function (Kp) of a proportional element. The integrating controller 78 outputs response to the input using a transfer function (Ki/s) of an integrating element. Then, the periodic variation controller 80 outputs response to the input using a transfer function F (periodic transfer function: ks·s/(s^2+Arot^2) of a cosine wave component. The outputs from the proportioning controller 76, the integrating controller 78 and the periodic variation controller 80 are added by an adder and then inputted to the rotated-fixed coordinate transformation part 72. Further, Arot in the period transfer function is an angular speed of the rotation shaft 14.

In some embodiments, the proportioning controller 76 is formed by a Mzn proportioning controller 76a and a Myn proportioning controller 76b, the integrating controller 78 being formed by a Mzn integrating controller 78a and a Myn integrating controller, the periodic variation controller 80 being formed by a Mzn periodic variation controller 80a and a Myn periodic variation controller 80b. The Mzn deviation is inputted to the Mzn proportioning controller 76a, the Mzn integrating controller 78a and the Mzn periodic variation controller 80a, whereas the Myn deviation is inputted to the Myn proportioning controller 76b, the Myn integrating controller 78b and the Myn periodic variation controller 80b.

In the case of the PI control, normally when the control amount varies periodically in a sinusoidal or cosinusoidal manner, the deviation can be reduced only to a certain extent. By increasing a gain, it is possible to make the deviation smaller. However, the larger gain may make the control unstable. The load impinging on the blade 16 (16a, 16b) contains the component that periodically varies in a sinusoidal or cosinusoidal manner. Thus, solely by PI control, the variable component impinging on the blade 16 (16a, 16b) can be reduced only to a certain extent.

In this aspect, in the wind turbine generator according to the some of the embodiments described above, the pitch angle adjustment amount is determined using the periodic variation transfer function and thus, even if the load impinging on the blade 16 (16a, 16b) contains the periodic variation component, it is possible to surely reduce the periodic variation component.

While the embodiments of the present invention have been described, it is obvious to those skilled in the art that various changes may be made without departing from the scope of the invention.

[Reference Signs list]

10    Tower
12    Nacelle
14    Rotation shaft
16    Blade
16a   First blade
16b   Second blade
18    Pitch drive mechanism
20    Control unit
22    Bearing
24    Speed-increasing mechanism
24a   Hydraulic pump
24b   Hydraulic motor
26    Generator
28    Hub
30    Yaw drive mechanism
31    Tower vibration meter
32    Azimuth angle sensor
33    Nacelle vibration meter
34    Blade load sensor
34a   First blade load sensor
34b   Second blade load sensor
36    Pitch angle sensor
36a   First pitch angle sensor
36b   Second pitch angle sensor
37    Wind direction sensor
38    Yaw angle sensor
40    Mzn moment calculation part
42    Myn moment calculation part
44    Basic Mzn component calculation part
46    Basic Myn component calculation part
48    Correction Mzn component calculation part
50    Correction Myn component calculation part
52    Mzn deviation calculation part
54    Myn deviation calculation part
56    Pitch angle adjustment amount determination part
58    Yaw angle adjustment amount determination part

**Claims**

1.  A wind turbine generator (1) comprising:

    a tower (10);
    a nacelle (12) supported by the tower (10);
    a rotation shaft (14) rotatably supported by the nacelle (12) in such a state that the rotation shaft (14) is tilted with respect to a horizontal axis of the rotation shaft (14);
    at least two blades (16) provided for the rotation shaft (14) with a pitch angle of each of the blades (16a, 16b) around an axis along a radial direction of the rotation shaft (14) being adjustable;
    a pitch drive mechanism (18) for adjusting the pitch angle of each of the blades (16a, 16b); and
    a control unit (20) configured to determine an adjustment amount of the pitch angle by which the pitch drive mechanism (18) is configured to adjust the pitch angle,
    wherein the control unit **characterized by** comprising:

    a Mzn moment calculation part (40) for calculating a Mzn moment impinging on the rotation shaft (14) around a vertical axis based on a load impinging on each of the plurality of blades (16);
    a basic Mzn component calculation part (44) for extracting a basic Mzn component from the Mzn moment, the basic Mzn component comprising at least a basic frequency component corresponding to a rotation speed of the rotation shaft (14) and a stationary component;

a correction Mzn component calculation part (48) for calculating a correction Mzn component which is a vertical component of the Mxn moment impinging on the rotation shaft (14) around the rotation shaft (14); and a pitch angle adjustment amount determination part (56) for calculating a Mzn deviation which is a difference between the basic Mzn component and the correction Mzn component and determining the adjustment amount of the pitch angle of each of the blades (16) based on the Mzn deviation.

2. The wind turbine generator (1) according to claim 1,
wherein the pitch angle adjustment amount determination unit (56) is configured to determine the adjustment amount of the pitch angle using the Mzn deviation and a periodic variation transfer function.

3. The wind turbine generator (1) according to claim 1 or 2, further comprising:

at least one vibration meter (31) for measuring vibration of the tower (10) in at least two directions; and
a yaw drive mechanism (30) for adjusting a yaw angle of the nacelle (12),
wherein the correction Mzn component calculation part (44) is configured to calculate the correction Mzn component based on the vibration of the tower (10) measured by the vibration meter (31) and the yaw angle of the nacelle (12).

4. The wind turbine generator (1) according to claim 1 or 2, further comprising:

at least one vibration meter (33) for measuring vibration of the nacelle (12) in at least two directions,
wherein the correction Mzn component calculation part (44) is configured to calculate the correction Mzn component based on the vibration of the nacelle (12) measured by the vibration meter (33).

5. The wind turbine generator (1) according to any one of claims 1 to 4, wherein the blades (16) comprise two blades (16a, 16b).

6. The wind turbine generator (1) according to any one of claims 1 to 5,
wherein the control unit (20) further comprises:

a Myn moment calculation part (42) for calculating a Myn moment impinging on the rotation shaft (14) around a horizontal axis based on a load impinging on each of the blades (16);
a basic Myn component calculation part (44) for extracting a basic Myn component from the Myn moment, the basic Myn component comprising at least a basic frequency component corresponding to the rotation speed of the rotation shaft (14) and a stationary component; and
a correction Myn component calculation part (50) for calculating a correction Myn component which is a horizontal component of a gyroscopic moment impinging on the rotation shaft (14),

wherein the pitch angle adjustment amount determination part (56) is configured to calculate a Myn deviation which is a difference between the basic Myn component and the correction Myn component and determine the adjustment amount of the pitch angle of each of the blades (16) based on the Mzn deviation and the Myn deviation.

7. The wind turbine generator (1) according to claim 6,
wherein the pitch angle adjustment amount determination part (56) is configured to determine the adjustment amount of the pitch angle of each of the blades (16) using the Mzn deviation, the Myn deviation and a periodic variation transfer function.

8. A control method for a wind turbine generator (1) which comprises: a tower (10); a nacelle (12) supported by the tower (10); a rotation shaft (14) rotatably supported by the nacelle (12) in such a state that the rotation shaft (14) is tilted with respect to a horizontal axis of the rotation shaft (14); at least two blades (16) provided for the rotation shaft (12) with a pitch angle of each of the blades (16a, 16b) around an axis along a radial direction of the rotation shaft (14) being adjustable; and a pitch drive mechanism (18) for adjusting the pitch angle of each of the blades (16), the method **characterized by** comprising:

a Mzn moment calculation step of calculating a Mzn moment impinging on the rotation shaft (12) around a vertical axis based on a load impinging on each of the blades (16);
a basic Mzn component calculation step of extracting a basic Mzn component from the Mzn moment, the basic Mzn component comprising a basic frequency component corresponding to a rotation speed of the rotation shaft (12) and a stationary component;
a correction Mzn component calculation step of calculating a correction Mzn component which is a vertical component of the Mxn moment impinging on the rotation shaft (12) around the rotation shaft (12); and
an adjustment amount determination step of calculating a Mzn deviation which is a difference between the basic Mzn component and the correction Mzn component and determining an adjustment amount of the pitch angle of each of the blades (16) based on the Mzn deviation.

9. The control method for the wind turbine generator (1) according to claim 8,
wherein, in the adjustment amount determination step, the adjustment amount of the pitch angle is determined using the Mzn deviation and a periodic variation transfer function.

10. The control method for the wind turbine generator (1) according to claim 8 or 9, wherein the wind turbine generator (1) further comprises a yaw drive mechanism (30) for adjusting a yaw angle of the nacelle (12), and
wherein, in the correction Mzn component calculation step, the correction Mzn component is calculated based on vibration of the tower (10) in at least two directions and the yaw angle of the nacelle (12).

11. The control method for the wind turbine generator (1) according to claim 8 or 9,
wherein, in the correction Mzn component calculation step, the correction Mzn component is calculated based on vibration of the nacelle (12) in at least two directions.

12. The control method for the wind turbine generator (1) according to any one of claims 8 to 11, further comprising:

a Myn moment calculation step of calculating a Myn moment impinging on the rotation shaft (12) around a horizontal axis based on a load impinging on each of the blades (16);
a basic Myn component calculation step of extracting a basic Myn component from the Myn moment by removing a high-frequency component having frequency higher than a basic frequency component corresponding to the rotation speed of the rotation shaft (14), the basic Myn component comprising the basic frequency component and a stationary component; and
a correction Myn component calculation step of calculating a correction Myn component which is a horizontal component impinging on the rotation shaft (12) around a horizontal axis due to a gyroscopic moment impinging on the rotation shaft (12),
wherein, in the adjustment amount determination step, a Myn deviation which is a difference between the basic Myn component and the correction Myn component is calculated and the adjustment amount of the pitch angle of each of the blades (16) is determined based on the Mzn deviation and the Myn deviation.

13. The control method for the wind turbine generator (1) according to claim 12,
wherein, in the adjustment amount determination step, the adjustment amount of the pitch angle of each of the blades is determined using the Mzn deviation, the Myn deviation and a periodic variation transfer function.

14. A control unit (20) for a wind turbine generator (1) which comprises: a tower (10); a nacelle (12) supported by the tower (10); a rotation shaft (14) rotatably supported by the nacelle (12) in such a state that the rotation shaft (14) is tilted with respect to a horizontal axis of the rotation shaft (14); at least two blades (16) provided for the rotation shaft (14) with a pitch angle of each of the blades (16a, 16b) around an axis along a radial direction of the rotation shaft (14) being adjustable ; and a pitch drive mechanism (18) for adjusting the pitch angle of each of the blades (16), the control unit (20) **characterized by** comprising:

a Mzn moment calculation part (40) for calculating a Mzn moment impinging on the rotation shaft (14) around a vertical axis based on a load impinging on each of the blades (16);
a basic Mzn component calculation part (44) for extracting a basic Mzn component from the Mzn moment, the basic Mzn component comprising a basic frequency component corresponding to a rotation speed of the rotation shaft (14) and a stationary component;
a correction Mzn component calculation part (48) for calculating a correction Mzn component which is a vertical component of the Mxn moment impinging on the rotation shaft (14) around the rotation shaft (14); and
a pitch angle adjustment amount determination part (56) for calculating a Mzn deviation which is a difference between the basic Mzn component and the correction Mzn component and determining an adjustment amount of the pitch angle of each of the blades (16) based on the Mzn deviation.

**Patentansprüche**

1. Windturbinengenerator (1), umfassend:

   einen Turm (10),
   eine Gondel (12), die durch den Turm (10) gestützt wird,
   eine Drehwelle (14), die durch die Gondel (12) in einer solchen Weise drehbar gestützt wird, dass die Drehwelle (14) mit Bezug auf eine horizontale Achse der Drehwelle (14) geneigt ist,
   mindestens zwei Flügel (16), die für die Drehwelle (14) vorgesehen sind, wobei ein Anstellwinkel eines jeden der Flügel (16a, 16b) um eine Achse entlang einer radialen Richtung der Drehwelle (14) herum verstellbar ist,
   einen Anstellantriebsmechanismus (18) zum Justieren des Anstellwinkels eines jeden der Flügel (16a, 16b), und
   eine Steuereinheit (20), die dafür konfiguriert ist, einen Justierbetrag des Anstellwinkels zu bestimmen, um den der Anstellantriebsmechanismus (18) den Anstellwinkel konfigurationsgemäß justiert,
   wobei die Steuereinheit **dadurch gekennzeichnet ist, dass** sie umfasst:

   einen Mzn-Momentberechnungsteil (40) zum Berechnen eines Mzn-Moments, das auf die Drehwelle (14) um eine vertikale Achse herum einwirkt, auf der Basis einer auf jeden der mehreren Flügel (16) auftreffenden Last,
   einen Basis-Mzn-Komponentenberechnungsteil (44) zum Extrahieren einer Basis-Mzn-Komponente aus dem Mzn-Moment, wobei die Basis-Mzn-Komponente mindestens eine Grundfrequenzkomponente, die einer Drehzahl der Drehwelle (14) entspricht, und eine stationäre Komponente umfasst,
   einen Korrektur-Mzn-Komponentenberechnungsteil (48) zum Berechnen einer Korrektur-Mzn-Komponente, die eine vertikale Komponente des Mxn-Moments ist, das auf die Drehwelle (14) um die Drehwelle (14) herum wirkt, und
   einen Anstellwinkeljustierbetragsbestimmungsteil (56) zum Berechnen einer Mzn-Abweichung, die eine Differenz zwischen der Basis-Mzn-Komponente und der Korrektur-Mzn-Komponente ist, und zum Bestimmen des Justierbetrages des Anstellwinkels eines jeden der Flügel (16) auf der Basis der Mzn-Abweichung.

2. Windturbinengenerator (1) nach Anspruch 1,
   wobei die Anstellwinkeljustierbetragsbestimmungseinheit (56) dafür konfiguriert ist, den Justierbetrag des Anstellwinkels unter Verwendung der Mzn-Abweichung und einer periodischen Variationstransferfunktion zu bestimmen.

3. Windturbinengenerator (1) nach Anspruch 1 oder 2, ferner umfassend:

   mindestens ein Vibrationsmessgerät (31) zum Messen von Vibrationen des Turmes (10) in mindestens zwei Richtungen, und
   einen Gierantriebsmechanismus (30) zum Justieren eines Gierwinkels der Gondel (12),

   wobei der Korrektur-Mzn-Komponentenberechnungsteil (44) dafür konfiguriert ist, die Korrektur-Mzn-Komponente auf der Basis der (10) durch das Vibrationsmessgerät (31) gemessenen Vibrationen des Turmes und des Gierwinkels der Gondel (12) zu berechnen.

4. Windturbinengenerator (1) nach Anspruch 1 oder 2, ferner umfassend:

   mindestens ein Vibrationsmessgerät (33) zum Messen von Vibrationen der Gondel (12) in mindestens zwei Richtungen,
   wobei der Korrektur-Mzn-Komponentenberechnungsteil (44) dafür konfiguriert ist, die Korrektur-Mzn-Komponente auf der Basis der (12) durch das Vibrationsmessgerät (33) gemessenen Vibrationen der Gondel zu berechnen.

5. Windturbinengenerator (1) nach einem der Ansprüche 1 bis 4,
   wobei die Flügel (16) zwei Flügel (16a, 16b) umfassen.

6. Windturbinengenerator (1) nach einem der Ansprüche 1 bis 5,
   wobei die Steuereinheit (20) ferner umfasst:

   einen Myn-Momentberechnungsteil (42) zum Berechnen eines Myn-Moments, das auf die Drehwelle (14) um eine horizontale Achse herum wirkt, auf der Basis einer auf jeden der Flügel (16) auftreffenden Last,

einen Basis-Myn-Komponentenberechnungsteil (44) zum Extrahieren einer Basis-Myn-Komponente aus dem Myn-Moment, wobei die Basis-Myn-Komponente mindestens eine Grundfrequenzkomponente, die der Drehzahl der Drehwelle (14) entspricht, und eine stationäre Komponente umfasst, und
einen Korrektur-Myn-Komponentenberechnungsteil (50) zum Berechnen einer Korrektur-Myn-Komponente, die eine horizontale Komponente eines gyroskopischen Moments ist, das auf die Drehwelle (14) wirkt,
wobei der Anstellwinkeljustierbetragsbestimmungsteil (56) dafür konfiguriert ist, eine Myn-Abweichung, die eine Differenz zwischen der Basis-Myn-Komponente und der Korrektur-Myn-Komponente ist, zu berechnen und den Justierbetrag des Anstellwinkels eines jeden der Flügel (16) auf der Basis der Mzn-Abweichung und der Myn-Abweichung zu bestimmen.

7.  Windturbinengenerator (1) nach Anspruch 6,
    wobei der Anstellwinkeljustierbetragsbestimmungsteil (56) dafür konfiguriert ist, den Justierbetrag des Anstellwinkels eines jeden der Flügel (16) unter Verwendung der Mzn-Abweichung, der Myn-Abweichung und einer periodischen Variationstransferfunktion zu bestimmen.

8.  Steuerungsverfahren für einen Windturbinengenerator (1), umfassend: einen Turm (10), eine Gondel (12), die durch den Turm (10) gestützt wird, eine Drehwelle (14), die durch die Gondel (12) in einen solchen Weise drehbar gestützt wird, dass die Drehwelle (14) mit Bezug auf eine horizontale Achse der Drehwelle (14) geneigt ist, mindestens zwei Flügel (16), die für die Drehwelle (14) vorgesehen sind, wobei ein Anstellwinkel eines jeden der Flügel (16a, 16b) um eine Achse entlang einen radialen Richtung der Drehwelle (14) herum verstellbar ist, und einen Anstellantriebsmechanismus (18) zum Justieren des Anstellwinkels eines jeden der Flügel (16), wobei das Verfahren **dadurch gekennzeichnet ist, dass** es umfasst:

    einen Mzn-Momentberechnungsschritt zum Berechnen eines Mzn-Moments, das auf die Drehwelle (12) um eine vertikale Achse herum wirkt, auf der Basis einer auf jeden der Flügel (16) auftreffenden Last,
    einen Basis-Mzn-Komponentenberechnungsschritt zum Extrahieren einer Basis-Mzn-Komponente aus dem Mzn-Moment, wobei die Basis-Mzn-Komponente eine Grundfrequenzkomponente, die einer Drehzahl der Drehwelle (12) entspricht, und eine stationäre Komponente umfasst,
    einen Korrektur-Mzn-Komponentenberechnungsschritt zum Berechnen einer Korrektur-Mzn-Komponente, die eine vertikale Komponente des Mxn-Moments ist, das auf die Drehwelle (12) um die Drehwelle (12) herum wirkt, und
    einen Justierbetragsbestimmungsschritt zum Berechnen einer Mzn-Abweichung, die eine Differenz zwischen der Basis-Mzn-Komponente und der Korrektur-Mzn-Komponente ist, und zum Bestimmen eines Justierbetrages des Anstellwinkels eines jeden der Flügel (16) auf der Basis der Mzn-Abweichung.

9.  Steuerungsverfahren für einen Windturbinengenerator (1) nach Anspruch 8,
    wobei, in dem Justierbetragsbestimmungsschritt, der Justierbetrag des Anstellwinkels unter Verwendung der Mzn-Abweichung und einer periodischen Variationstransferfunktion bestimmt wird.

10. Steuerungsverfahren für einen Windturbinengenerator (1) nach Anspruch 8 oder 9,
    wobei der Windturbinengenerator (1) ferner einen Gierantriebsmechanismus (30) zum Justieren eines Gierwinkels der Gondel (12) umfasst, und
    wobei, in dem Korrektur-Mzn-Komponentenberechnungsschritt, die Korrektur-Mzn-Komponente auf der Basis von Vibrationen des Turmes (10) in mindestens zwei Richtungen und des Gierwinkels der Gondel (12) berechnet wird.

11. Steuerungsverfahren für einen Windturbinengenerator (1) nach Anspruch 8 oder 9,
    wobei, in dem Korrektur-Mzn-Komponentenberechnungsschritt, die Korrektur-Mzn-Komponente auf der Basis von Vibrationen der Gondel (12) in mindestens zwei Richtungen berechnet wird.

12. Steuerungsverfahren für einen Windturbinengenerator (1) nach einem der Ansprüche 8 bis 11, ferner umfassend:

    einen Myn-Momentberechnungsschritt zum Berechnen eines Myn-Moments, das auf die Drehwelle (12) um eine horizontale Achse herum wirkt, auf der Basis einer auf jeden der Flügel (16) auftreffenden Last,
    einen Basis-Myn-Komponentenberechnungsschritt zum Extrahieren einer Basis-Myn-Komponente aus dem Myn-Moment durch Entfernen einer Hochfrequenzkomponente, die eine Frequenz aufweist, die höher als eine Grundfrequenzkomponente ist, die der Drehzahl der Drehwelle (14) entspricht, wobei die Basis-Myn-Komponente die Grundfrequenzkomponente und eine stationäre Komponente umfasst, und
    einen Korrektur-Myn-Komponentenberechnungsschritt zum Berechnen einer Korrektur-Myn-Komponente, die eine horizontale Komponente ist, die aufgrund eines auf die Drehwelle (12) wirkenden gyroskopischen Moments auf die Drehwelle (12) um eine horizontale Achse herum wirkt,
wobei, in dem Justierbetragsbestimmungsschritt, eine Myn-Abweichung, die eine Differenz zwischen der Basis-Myn-Komponente und der Korrektur-Myn-Komponente ist, berechnet wird, und der Justierbetrag des Anstellwinkels eines jeden der Flügel (16) auf der Basis der Mzn-Abweichung und der Myn-Abweichung bestimmt wird.

13. Steuerungsverfahren für einen Windturbinengenerator (1) nach Anspruch 12,
wobei, in dem Justierbetragsbestimmungsschritt, der Justierbetrag des Anstellwinkels eines jeden der Flügel unter Verwendung der Mzn-Abweichung, der Myn-Abweichung und einer periodischen Variationstransferfunktion bestimmt wird.

14. Steuereinheit (20) für einen Windturbinengenerator (1), umfassend: einen Turm (10), eine Gondel (12), die durch den Turm (10) gestützt wird, eine Drehwelle (14), die durch die Gondel (12) in einen solchen Weise drehbar gestützt wird, dass die Drehwelle (14) mit Bezug auf eine horizontale Achse der Drehwelle (14) geneigt ist, mindestens zwei Flügel (16), die für die Drehwelle (14) vorgesehen sind, wobei ein Anstellwinkel eines jeden der Flügel (16a, 16b) um eine Achse entlang einen radialen Richtung der Drehwelle (14) herum verstellbar ist, und einen Anstellantriebsmechanismus (18) zum Justieren des Anstellwinkels eines jeden der Flügel (16), wobei die Steuereinheit (20) **dadurch gekennzeichnet ist, dass** sie umfasst:

einen Mzn-Momentberechnungsteil (40) zum Berechnen eines Mzn-Moments, das auf die Drehwelle (14) um eine vertikale Achse herum einwirkt, auf der Basis einer auf jeden der Flügel (16) auftreffenden Last,
einen Basis-Mzn-Komponentenberechnungsteil (44) zum Extrahieren einer Basis-Mzn-Komponente aus dem Mzn-Moment, wobei die Basis-Mzn-Komponente eine Grundfrequenzkomponente, die einer Drehzahl der Drehwelle (14) entspricht, und eine stationäre Komponente umfasst,
einen Korrektur-Mzn-Komponentenberechnungsteil (48) zum Berechnen einer Korrektur-Mzn-Komponente, die eine vertikale Komponente des Mxn-Moments ist, das auf die Drehwelle (14) um die Drehwelle (14) herum wirkt, und
einen Anstellwinkeljustierbetragsbestimmungsteil (56) zum Berechnen einer Mzn-Abweichung, die eine Differenz zwischen der Basis-Mzn-Komponente und der Korrektur-Mzn-Komponente ist, und zum Bestimmen eines Justierbetrages des Anstellwinkels eines jeden der Flügel (16) auf der Basis der Mzn-Abweichung.

**Revendications**

1. Eolienne (1) comportant :

une tour (10) ;
une nacelle (12) supportée par la tour (10) ;
un arbre de rotation (14) supporté de façon rotative par la nacelle (12) dans un état tel que l'arbre de rotation (14) est incliné par rapport à un axe horizontal de l'arbre de rotation (14) ;
au moins deux pales (16) prévues pour l'arbre de rotation (14) avec un angle de pas de chacune des pales (16a, 16b) autour d'un axe le long d'une direction radiale de l'arbre de rotation (14) qui est réglable ;
un mécanisme d'entraînement de pas (18) destiné à ajuster l'angle de pas de chacune des pales (16a, 16b) ; et
une unité de commande (20) configurée pour déterminer une quantité d'ajustement de l'angle de pas de laquelle le mécanisme d'entraînement de pas (18) est configuré pour ajuster l'angle de pas,
l'unité de commande étant **caractérisée en ce qu'**elle comporte :

une partie de calcul de moment Mzn (40) destinée à calculer un moment Mzn agissant sur l'arbre de rotation (14) autour d'un axe vertical sur la base d'une charge agissant sur chaque pale de la pluralité de pales (16) ;
une partie de calcul de composante de Mzn de base (44) destinée à extraire une composante de Mzn de base du moment Mzn, la composante de Mzn de base comportant au moins une composante de fréquence de base correspondant à une vitesse de rotation de l'arbre de rotation (14) et une composante stationnaire ;
une partie de calcul de composante de Mzn de correction (48) destinée à calculer une composante de Mzn de correction qui est une composante verticale du moment Mxn agissant sur l'arbre de rotation (14) autour de l'arbre de rotation (14) ; et
une partie de détermination de quantité d'ajustement d'angle de pas (56) destinée à calculer un écart de Mzn qui est une différence entre la composante de Mzn de base et la composante de Mzn de correction et à déterminer la quantité d'ajustement de l'angle de pas de chacune des pales (16) sur la base de l'écart de Mzn.

2. Eolienne (1) selon la revendication 1,
dans laquelle l'unité de détermination de quantité d'ajustement d'angle de pas (56) est configurée pour déterminer la quantité d'ajustement de l'angle de pas en utilisant l'écart de Mzn et une fonction de transfert à variation périodique.

3. Eolienne (1) selon la revendication 1 ou 2, comportant en outre :

au moins un dispositif de mesure de vibration (31) destiné à mesurer une vibration de la tour (10) dans au moins deux directions ; et
un mécanisme d'entraînement de lacet (30) destiné à ajuster un angle de lacet de la nacelle (12),
dans laquelle la partie de calcul de composante de Mzn de correction (44) est configurée pour calculer la composante de Mzn de correction sur la base de la vibration de la tour (10) mesurée par le dispositif de mesure de vibration (31) et de l'angle de lacet de la nacelle (12).

4. Eolienne (1) selon la revendication 1 ou 2, comportant en outre :

au moins un dispositif de mesure de vibration (33) destiné à mesurer une vibration de la nacelle (12) dans au moins deux directions,
dans laquelle la partie de calcul de composante de Mzn de correction (44) est configurée pour calculer la composante de Mzn de correction sur la base de la vibration de la nacelle (12) mesurée par le dispositif de mesure de vibration (33).

5. Eolienne (1) selon l'une quelconque des revendications 1 à 4,
dans laquelle les pales (16) comportent deux pales (16a, 16b).

6. Eolienne (1) selon l'une quelconque des revendications 1 à 5,
dans laquelle l'unité de commande (20) comporte en outre :

une partie de calcul de moment Myn (42) destinée à calculer un moment Myn agissant sur l'arbre de rotation (14) autour d'un axe horizontal sur la base d'une charge agissant sur chacune des pales (16) ;
une partie de calcul de composante de Myn de base (44) destinée à extraire une composante de Myn de base du moment Myn, la composante de Myn de base comportant au moins une composante de fréquence de base correspondant à la vitesse de rotation de l'arbre de rotation (14) et une composante stationnaire ; et
une partie de calcul de composante de Myn de correction (50) destinée à calculer une composante de Myn de correction qui est une composante horizontale d'un moment gyroscopique agissant sur l'arbre de rotation (14),
dans laquelle la partie de détermination de quantité d'ajustement d'angle de pas (56) est configurée pour calculer un écart de Myn qui est une différence entre la composante de Myn de base et la composante de Myn de correction et déterminer la quantité d'ajustement de l'angle de pas de chacune des pales (16) sur la base de l'écart de Mzn et de l'écart de Myn.

7. Eolienne (1) selon la revendication 6,
dans laquelle la partie de détermination de quantité d'ajustement d'angle de pas (56) est configurée pour déterminer la quantité d'ajustement de l'angle de pas de chacune des pales (16) en utilisant l'écart de Mzn, l'écart de Myn et une fonction de transfert à variation périodique.

8. Procédé de commande pour une éolienne (1) qui comporte : une tour (10) ; une nacelle (12) supportée par la tour (10) ; un arbre de rotation (14) supporté de façon rotative par la nacelle (12) dans un état tel que l'arbre de rotation (14) est incliné par rapport à un axe horizontal de l'arbre de rotation (14) ; au moins deux pales (16) prévues pour l'arbre de rotation (14) avec un angle de pas de chacune des pales (16a, 16b) autour d'un axe le long d'une direction radiale de l'arbre de rotation (14) qui est réglable ; et un mécanisme d'entraînement de pas (18) destiné à ajuster l'angle de pas de chacune des pales (16a, 16b) ; le procédé étant **caractérisé en ce qu'**il comporte :

une étape de calcul de moment Mzn destinée à calculer un moment Mzn agissant sur l'arbre de rotation (14) autour d'un axe vertical sur la base d'une charge agissant sur chacune des pales (16) ;
une étape de calcul de composante de Mzn de base destinée à extraire une composante de Mzn de base du moment Mzn, la composante de Mzn de base comportant au moins une composante de fréquence de base correspondant à une vitesse de rotation de l'arbre de rotation (14) et une composante stationnaire ;

une étape de calcul de composante de Mzn de correction destinée à calculer une composante de Mzn de correction qui est une composante verticale du moment Mxn agissant sur l'arbre de rotation (14) autour de l'arbre de rotation (14) ; et

une étape de détermination de quantité d'ajustement destinée à calculer un écart de Mzn qui est une différence entre la composante de Mzn de base et la composante de Mzn de correction et à déterminer une quantité d'ajustement de l'angle de pas de chacune des pales (16) sur la base de l'écart de Mzn.

9. Procédé de commande pour l'éolienne (1) selon la revendication 8,
selon lequel, dans l'étape de détermination de quantité d'ajustement, la quantité d'ajustement de l'angle de pas est déterminée en utilisant l'écart de Mzn et une fonction de transfert à variation périodique.

10. Procédé de commande pour l'éolienne (1) selon la revendication 8 ou 9,
selon lequel l'éolienne (1) comporte en outre un mécanisme d'entraînement de lacet (30) destiné à ajuster un angle de lacet de la nacelle (12), et
selon lequel, dans l'étape de calcul de composante de Mzn de correction, la composante de Mzn de correction est calculée sur la base d'une vibration de la tour (10) dans au moins deux directions et de l'angle de lacet de la nacelle (12).

11. Procédé de commande pour l'éolienne (1) selon la revendication 8 ou 9,
selon lequel, dans l'étape de calcul de composante de Mzn de correction, la composante de Mzn de correction est calculée sur la base d'une vibration de la nacelle (12) dans au moins deux directions.

12. Procédé de commande pour l'éolienne (1) selon l'une quelconque des revendications 8 à 11, comportant en outre :

une étape de calcul de moment Myn destinée à calculer un moment Myn agissant sur l'arbre de rotation (12) autour d'un axe horizontal sur la base d'une charge agissant sur chacune des pales (16) ;
une étape de calcul de composante de Myn de base destinée à extraire une composante de Myn de base du moment Myn en enlevant une composante à haute fréquence ayant une fréquence plus élevée qu'une composante de fréquence de base correspondant à la vitesse de rotation de l'arbre de rotation (14), la composante de Myn de base comportant la composante de fréquence de base et une composante stationnaire ; et
une étape de calcul de composante de Myn de correction destinée à calculer une composante de Myn de correction qui est une composante horizontale agissant sur l'arbre de rotation (12) autour d'un axe horizontal due à un moment gyroscopique agissant sur l'arbre de rotation (12),
selon lequel, dans l'étape de détermination de quantité d'ajustement, un écart de Myn qui est une différence entre la composante de Myn de base et la composante de Myn de correction est calculée et la quantité d'ajustement de l'angle de pas de chacune des pales (16) est déterminée sur la base de l'écart de Mzn et de l'écart de Myn.

13. Procédé de commande pour l'éolienne (1) selon la revendication 12,
selon lequel, dans l'étape de détermination de quantité d'ajustement, la quantité d'ajustement de l'angle de pas de chacune des pales est déterminée en utilisant l'écart de Mzn, l'écart de Myn et une fonction de transfert à variation périodique.

14. Unité de commande (20) pour un éolienne (1) qui comporte : une tour (10) ; une nacelle (12) supportée par la tour (10) ; un arbre de rotation (14) supporté de façon rotative par la nacelle (12) dans un état tel que l'arbre de rotation (14) est incliné par rapport à un axe horizontal de l'arbre de rotation (14) ; au moins deux pales (16) prévues pour l'arbre de rotation (14) avec un angle de pas de chacune des pales (16a, 16b) autour d'un axe le long d'une direction radiale de l'arbre de rotation (14) qui est réglable ; et un mécanisme d'entraînement de pas (18) destiné à ajuster l'angle de pas de chacune des pales (16), l'unité de commande (20) étant **caractérisée en ce qu'**elle comporte :

une partie de calcul de moment Mzn (40) destinée à calculer un moment Mzn agissant sur l'arbre de rotation (14) autour d'un axe vertical sur la base d'une charge agissant sur chacune des pales (16) ;
une partie de calcul de composante de Mzn de base (44) destinée à extraire une composante de Mzn de base du moment Mzn, la composante de Mzn de base comportant une composante de fréquence de base correspondant à une vitesse de rotation de l'arbre de rotation (14) et une composante stationnaire ;
une partie de calcul de composante de Mzn de correction (48) destinée à calculer une composante de Mzn de correction qui est une composante verticale du moment Mxn agissant sur l'arbre de rotation (14) autour de l'arbre de rotation (14) ; et

une partie de détermination de quantité d'ajustement d'angle de pas (56) destinée à calculer un écart de Mzn qui est une différence entre la composante de Mzn de base et la composante de Mzn de correction et à déterminer une quantité d'ajustement de l'angle de pas de chacune des pales (16) sur la base de l'écart de Mzn.

FIG. 1

# FIG. 2

# FIG. 3

FIG. 4

16a (16)

10

12

Yk

Xk

LEFT-RIGHT
DIRECTION
OF TOWER

FRONT-BACK
DIRECTION
OF TOWER

16b (16)

# FIG. 5

| CONTROL UNIT 20 | |
|---|---|
| Mzn MOMENT CALCULATION PART — 40 | TOWER VIBRATION METER — 31 |
| Myn MOMENT CALCULATION PART — 42 | AZIMUTH ANGLE SENSOR — 32 |
| BASIC Mzn COMPONENT CALCULATION PART — 44 | FIRST BLADE LOAD SENSOR — 34a (34) |
| BASIC Myn COMPONENT CALCULATION PART — 46 | SECOND BLADE LOAD SENSOR — 34b (34) |
| CORRECTION Mzn COMPONENT CALCULATION PART — 48 | FIRST PITCH ANGLE SENSOR — 36a |
| CORRECTION Myn COMPONENT CALCULATION PART — 50 | SECOND PITCH ANGLE SENSOR — 36b |
| Mzn DEVIATION CALCULATION PART — 52 | WIND DIRECTION SENSOR — 37 |
| Myn DEVIATION CALCULATION PART — 54 | YAW ANGLE SENSOR — 38 |
| PITCH ANGLE ADJUSTMENT AMOUNT DETERMINATION PART — 56 | FIRST BLADE PITCH DRIVE MECHANISM — 18a (18) |
| | SECOND BLADE PITCH DRIVE MECHANISM — 18b (18) |
| YAW ANGLE ADJUSTMENT AMOUNT DETERMINATION PART — 58 | YAW DRIVE MECHANISM — 30 |

24

# FIG. 6

Block diagram showing signal flow:

- AZIMUTH ANGLE (input, branches to block 60 and block 72)
- FIRST BLADE LOAD → 
- SECOND BLADE LOAD → **ROTATED-FIXED COORDINATE TRANSFORMATION PART (60)**
- Block 60 outputs → **Mzn NOTCH FILTER (62a)** → summing junction (68a) (− / +) → **Mzn PI CONTROLLER (70a)** → 
- Block 60 outputs → **Myn NOTCH FILTER (62b)** → summing junction (68b) (− / +) → **Myn PI CONTROLLER (70b)** →
- Both PI controllers → **ROTATED-FIXED COORDINATE TRANSFORMATION PART (72)** → FIRST BLADE PITCH ANGLE ADJUSTMENT AMOUNT / SECOND BLADE PITCH ANGLE ADJUSTMENT AMOUNT

- NACELLE YAW ANGLE → 
- TOWER VIBRATION IN FRONT-BACK DIRECTION (LOAD) → 
- TOWER VIBRATION IN LEFT-RIGHT DIRECTION (LOAD) → **COMPONENT COMPOSITION-DECOMPOSITION PART (64)**
- Block 64 → **Mzn LPF (66a)** → summing junction 68a
- Block 64 → **Myn LPF (66b)** → summing junction 68b

EP 2 770 195 B1

# FIG. 7

EP 2 770 195 B1

**EP 2 770 195 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100014971 A